# EUROPEAN PATENT SPECIFICATION

(11) **EP 2 950 597 B1**
(45) Date of publication and mention of the grant of the patent: **17.10.2018**
(21) Application number: 15169785.1
(22) Date of filing: 29.05.2015
(51) Int. Cl.: H04W 52/36, H04B 17/318

(54) **DETERMINING AND CONTROLLING RADIATION EXPOSURE**
BESTIMMUNG UND STEUERUNG DER STRAHLENEXPOSITION
DÉTERMINATION ET CONTRÔLE DE L'EXPOSITION À UN RAYONNEMENT

(30) Priority: 30.05.2014 FI 20145496
(43) Date of publication of application: 02.12.2015
(73) Proprietor: Cellraid Ltd, 90100 Oulu (FI)
(72) Inventor: Niemi, Pasi, 90100 Oulu (FI); Kankaala, Markku, 90100 Oulu (FI)
(74) Representative: Kolster Oy Ab

(56) References cited:
- EP-A1- 2 410 661
- US-A1- 2010 203 862
- US-A1- 2013 178 240

## Description

### Field of the invention

The exemplary and non-limiting embodiments of the invention relate generally to wireless communication systems. Embodiments of the invention relate especially to apparatuses, methods, and computer program products in determining and controlling radiation exposure in wireless communication systems.

### Background of the invention

The use of mobile communication devices has increased in recent decades. At first mobile phones were used extensively for making voice calls. As technology has developed and made high bandwidth data communication possible, the use of mobile devices for data transfer has increased to such extent that mobile data transfer may be even more common than voice calls. The use of modern data services, including email and social media, often require almost continuous connection to networks. The users of user terminals may have enabled the user terminals to connect to network on their own without active user intervention.

The mobile communication devices communicate with communications networks using radio frequency transmissions. The effect of electromagnetic radio frequency radiation on users has been studied in recent years but no conclusive results on the harmful effects have yet been discovered. All radio communication devices must fulfil government issued safety criteria regarding radiation properties. However, users of the devices may want to monitor radiation exposure themselves.

US2013/178240, EP2410661 and US2010/203862 disclose solutions for determining radiation power level of terminals.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided an apparatus, comprising: at least one processor; and at least one memory including computer program code, the at least one memory and the computer program code configured to, with the at least one processor, cause the apparatus at least to: receive information on a power level of signals at least one radio transceiver of a user terminal has received from one or more external transmitters; determine information on a power level of signals transmitted by the at least one radio transceiver of the user terminal; determining information on a call connection and data transfer status of the user terminal; receive information from one or more sensors of the user terminal; determine the model of the user terminal; transmit a query to a cloud server regarding the properties of the user terminal, the query comprising the model of the user terminal; receive from the cloud server information on the SAR value of the model of the user terminal; determine an amount of electromagnetic radiation the user of the user terminal is exposed to separately for call connections and data transfer traffic on the basis on the received and determined information and properties of the user terminal; compare the determined amount of radiation to a predetermined radiation value; and control a voice call and data transfer capabilities of the user terminal on the basis of the comparison.

According to an aspect of the present invention, there is provided a computer program product embodied on a distribution medium readable by a computer and comprising program instructions which, when loaded into an apparatus, execute the steps: receiving information on a power level of signals at least one radio transceiver of a user terminal has received from one or more external transmitters; determining information on a power level of signals transmitted by the at least one radio transceiver of the user terminal; determining information on a call connection and data transfer status of the user terminal: receiving information from one or more sensors of the user terminal; determine the model of the user terminal; transmit a query to a cloud server regarding the properties of the user terminal, the query comprising the model of the user terminal; receive from the cloud server information on the SAR value of the model of the user terminal; determining an amount of electromagnetic radiation the user of the user terminal is exposed to separately for call connections and data transfer traffic on the basis on the received and determined information and properties of the user terminal; comparing the determined amount of radiation to a predetermined radiation value; and control a voice call and data transfer capabilities of the user terminal on the basis of the comparison.

### List of drawings

In the following the invention will be described in greater detail by means of preferred embodiments with reference to the accompanying drawings, in which
Figure 1 illustrates a simplified view of a communication environment;
Figures 2, 3, 4 and 5 are flowcharts illustrating example embodiments; and
Figure 6 illustrates a simplified example of an apparatus in which some embodiments of the invention may be applied.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain also features, structures, units, modules etc. that have not been specifically mentioned.

The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, embodiments.

Many different radio protocols to be used in communications systems exist. Some examples of different communication systems are the universal mobile telecommunications system (UMTS) radio access network (UTRAN or E-UTRAN), long term evolution (LTE®, known also as E-UTRA), long term evolution advanced (LTE-A®), Wireless Local Area Network (WLAN, WiFi) based on IEEE 802.11 stardard, worldwide interoperability for microwave access (WiMAX), Bluetooth®, personal communications services (PCS) and systems using ultra-wideband (UWB) technology. IEEE refers to the Institute of Electrical and Electronics Engineers. LTE and LTE-A are developed by the Third Generation Partnership Project 3GPP.

Embodiments of the invention are applicable to apparatuses in communication system or any combination of different communication systems that support required functionalities.

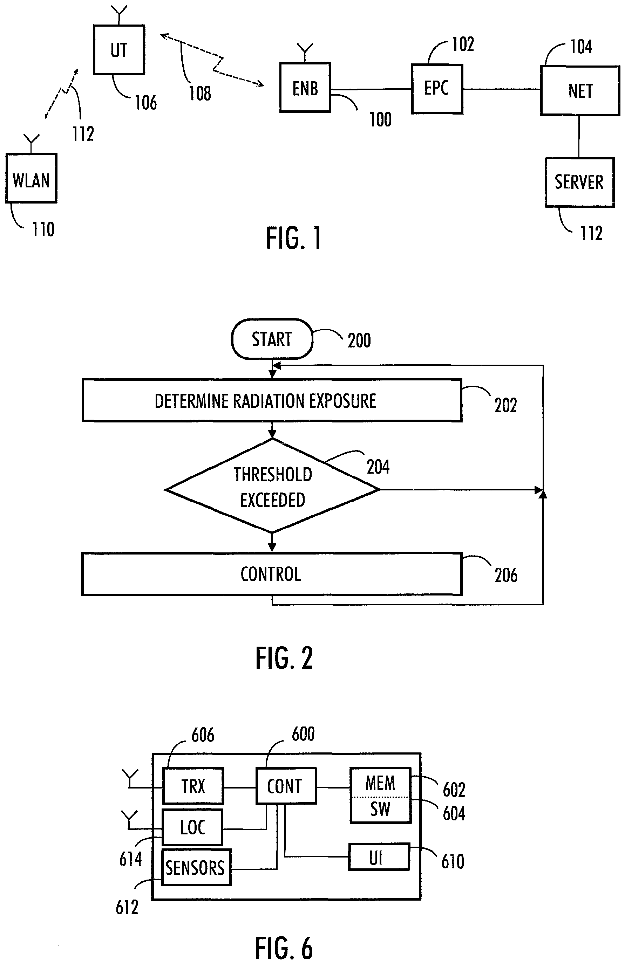

Figure 1 illustrates an example of an access architecture based on a long term evolution advanced (LTE Advanced, LTE-A) system. The LTE-A system is one example of a system where embodiments of the invention may be applied.

Figure 1 illustrates a simplified view of a communication environment only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for communication are irrelevant to the actual invention. Therefore, they need not to be discussed in more detail here.

Figure 1 shows an eNodeB 100 connected to an Evolved Packet Core EPC 102 of a communication system. The eNodeB's form a part of the radio access network (RAN) of the communication system.

The eNodeB 100, that may also be called a base station of the radio system may host the functions for Radio Resource Management: Radio Bearer Control, Radio Admission Control, Connection Mobility Control, Dynamic Resource Allocation (scheduling). Depending on the system, the counterpart on the EPC side can be a serving gateway (S-GW, routing and forwarding user data packets), packet data network gateway (P-GW, for providing connectivity of user devices (UEs) to external packet data networks), and/or mobile management entity (MME), etc. The MME (not shown) is responsible for the overall user terminal control in mobility, session/call and state management with assistance of the eNodeBs through which the user terminals may connect to the network.

The communication system is also able to communicate with other networks, such as a public switched telephone network or the Internet 104. It should be appreciated that eNodeBs or their functionalities may be implemented by using any node, host, server or access point etc. entity suitable for such a usage.

The user terminal UT 106 (also called user device, user equipment, terminal device, etc.) illustrates one type of an apparatus which communicates 108 with the communication network. The communication may comprise both voice calls and data traffic, such as a data connection to a network server 112, for example.

The user terminal typically refers to a portable computing device that includes wireless mobile communication devices operating with or without a subscriber identification module (SIM), including, but not limited to, the following types of devices: a mobile station (mobile phone), smartphone and personal digital assistant (PDA), for example.

The user terminal is configured to perform one or more of user equipment functionalities. The device may also be called a subscriber unit, mobile station, remote terminal, access terminal, user equipment (UE) just to mention but a few names or apparatuses.

Further, although the apparatuses have been depicted as single entities, different units, processors and/or memory units (not all shown in Figure 1) may be implemented

The user terminal 106 may be in radio connection with one or more external transceivers. One type of the external transceiver is the eNodeB 100. In addition to the eNodeB 100, the user terminal 106 may be in connection with one or more wireless network base stations or nodes 110. The base stations 110 may be WLAN or WiFi base stations or routers, for example. In addition, the user terminal may have a Bluetooth connection with another device.

The radio connections between user terminals and base stations or eNodeBs utilise various frequency bands which are standardised and controlled by international treaties and local authorities. For example, GSM systems typically utilise 450, 900 and 1800 MHz frequency bands, UMTS systems typically utilise 800, 1900 and 2100 MHz frequency bands and WLAN or WiFi typically utilise various frequency bands between 2,4 GHz and 5,9 GHz. The mentioned frequency bands are merely illustrative examples as also other frequency bands may be used by the systems in different countries.

Effects of the electromagnetic radiation on users caused by mobile communication devices have been studied since wireless communications systems have been taken into use. The transmitted power levels of the communication devices vary according to propagation effects and the distances between the transceivers. A user terminal situated at a border of the service area of a base station may transmit using considerably greater transmit power compared to a user terminal situated close to the base station. To ensure that health hazards are avoided governments have issued certain limits to the allowed transmit powers of both user terminals and base stations. User terminals are manufactured and communication systems are designed taking these limitations into account.

However, users of the user terminals may want to monitor themselves the radiation exposure they receive from the use of the user terminals. An embodiment of the invention provides an apparatus configured to determine the radiation experienced by a user of a user terminal of a wireless communication system. The apparatus may be configured to control the operations of the user terminal on the basis of determined radiation exposure.

Figure 2 is a flowchart illustrating an example embodiment of the invention. The example illustrates the operation of an apparatus configured to determine the amount of electromagnetic radiation the user of the user terminal is exposed to and control the voice call and data transfer capabilities of the user terminal. In an embodiment, the apparatus may be the user terminal or a part of a user terminal running suitable software configured to control the execution of following steps. The example starts at step 200.

In step 202, the apparatus is configured to determine an estimate for the amount of electromagnetic radiation experienced by the user of the user terminal.

In step 204, the apparatus is configured to compare the determined amount of radiation to a predetermined radiation value.

In step 206, the apparatus is configured to control the voice call and data transfer capabilities of the user terminal on the basis of the comparison.

In an embodiment, the apparatus is configured to control the data transfer capabilities by disabling data transfer when instantaneous amount of radiation the user of the user terminal is exposed to is larger than a predetermined instantaneous radiation value.

In an embodiment, the apparatus is configured to control the data transfer capabilities by allowing data transfer only periodically. In an embodiment, data transfer may be allowed to be performed only at predetermined time instants. For example, the data transfer may be allowed only for a few minutes every half hour or for a few minutes every hour.

In an embodiment, the time of day may be taken into account. For example, data transfer may be allowed or prevented at given time instants. Thus, data traffic may be allowed after 16:00 only for five minutes each hour, for instance, or data traffic may be prevented totally after a given time in the evening. Further examples of controlling voice calls and data transfers are given below.

In an embodiment, the above process is continuing from step 202. i.e. the apparatus may be configured to execute the process continuously.

In an embodiment, the apparatus is configured to determine and cumulative values for the amount of electromagnetic radiation the user of the user terminal is exposed to and take cumulative values into account in the comparison.

In an embodiment, when the apparatus is switched on or a software capable of executing the above embodiments is initiated, the apparatus or software may be configured to determine a selected operation mode. The apparatus or software may provide the user an option to utilise the apparatus or software merely for monitoring the radiation exposure or alternatively monitoring the radiation exposure and controlling the user terminal on the basis of the monitoring. The predetermined threshold used in the comparison may be given by the user or it may be a pre-issued radiation value based on research, measurements or other information. It may be read from a network server, for example.

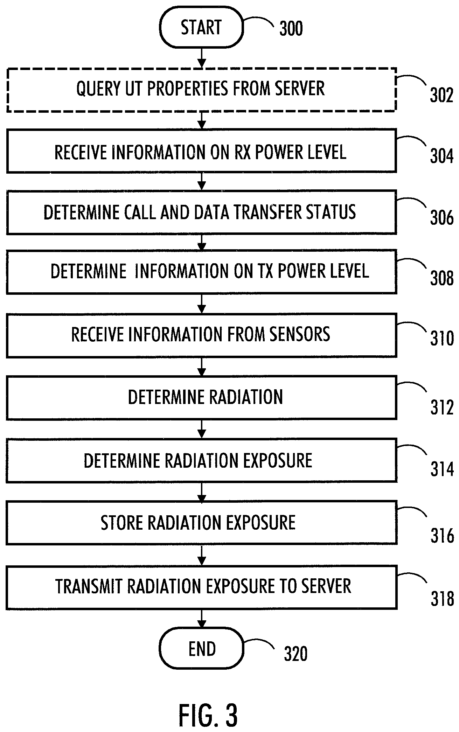

Figure 3 is a flowchart illustrating an example embodiment. The example illustrates how the apparatus of Figure 2 may perform step 202 of Figure 2 in more detail. In an embodiment, the apparatus may be the user terminal or a part of a user terminal running suitable software configured to control the execution of following steps. The example starts at step 300.

In step 302, the apparatus is configured to determine the model of the user terminal, transmit a query to a network server regarding the properties of the user terminal and receive from the server information on the properties of the user terminal. The information may comprise the specific absorption rate (SAR) value of the user terminal.

The SAR value is used as measure of the rate at which energy is absorbed by a human body when exposed to a electromagnetic field caused by radio communication. Each user terminal type is tested and a SAR value for each type of user terminal is published. In an embodiment, a network server is configured to store SAR values of different types of user terminals. A user terminal may transmit a query to the server, the query comprising the type of the user terminal and receive as a response the SAR value of the user terminal type.

This step may be performed once or at given time intervals. The step is optional as the user of the apparatus might as well type the SAR value manually.

In step 304, the apparatus is configured to receive information on the power level of signals at least one radio transceiver of a user terminal has received from one or more external transmitters. In an embodiment, the controller of the apparatus may query from the radio modem or radio modems of the transceiver of the user terminal the strength of the signal or signals received from base stations or eNodeB's the user terminal is connected to.

In step 306, the apparatus is configured to determine information on the call connection and data transfer status of the user terminal. The apparatus may determine whether there is a voice call and/or data transfer presently on-going.

In step 308, the apparatus is configured to determine information on the power level of the signals transmitted by at least one radio transceiver of the user terminal. In an embodiment, the controller of the apparatus is configured to determine the information based on measurements made from the outputs of the radio modem or modems of the transceiver of the user terminal. In an embodiment, the controller of the apparatus is configured to estimate the information based on the power level of the signals received by the user terminal and information on the system the user terminal is communicating with and the user terminal propertied. The call connection and data transfer status may be taken into account.

In step 310, the apparatus is configured to receive information from one or more sensors of the user terminal. Examples of the one or more sensors of the user terminal comprise proximity, acceleration, location and temperature sensors. The use of sensors is explained further below.

In step 312, the apparatus is configured to determine an estimate for the amount of electromagnetic radiation on the basis on the received and determined information and the properties of the user terminal. The SAR value of the user terminal may be utilised in the determination. In an embodiment, the determined amount electromagnetic radiation may comprise information on the radiation originating from the external transmitter and the radio transceiver of the user terminal. Thus, powers of both the received and transmitted signal may be taken into account.

In step 314, the apparatus is configured to determine an estimate for the user radiation exposure. In an embodiment, the information received from the sensors may be utilised in determining the estimate for the user radiation exposure on the basis of estimate for the amount of electromagnetic radiation. The sensors may be used to determine where the user terminal is located in relation to the user of the terminal. If the sensors indicate that the terminal is located away from the user it may be determined that the amount of radiation the user is exposed to is small compared to the amount of electromagnetic radiation. This is due to the attenuation due to distance. This may be the case when there is an on-going data transfer but the proximity and acceleration sensors indicate that the terminal is stable, for example on a table. The sensors may also indicate that the user terminal is in a pocket, for example. If the user terminal is held by the ear of the user, as may be the case when there is an on-going call and no hands-free equipment is in use, the amount of radiation is greater as the distance between the user terminal antenna and user is shorter.

The location sensor may comprise a satellite location receiver such as GPS (Global Positioning System) or Glonass, for example. The location of the user terminal may be determined and stored in connection with the amount of electromagnetic radiation experienced by the user.

In step 316, the apparatus is configured to store the determined amount of electromagnetic radiation experienced by the user in memory. In addition, the apparatus may determine and store the time instant of the determination. The location of the terminal and identification of the user terminal may be stored as well. In an embodiment, the user terminal identification comprises the International Mobile Equipment Identity (IMEI) and the type of the user terminal.

The determined amount of electromagnetic radiation experienced by the user may be shown on the display of the apparatus. In addition, the apparatus may display cumulative radiation values. The displaying of the radiation values may be a user selectable option.

In step 318, the apparatus is configured to control the transmission of the information on the determined amount to a network server. The user terminal identification, location of the terminal and time instant of the determination may be transmitted to a network server as well. The storing of the radiation values to a network server may be a user selectable option. In an embodiment, the user terminal identification comprises the International Mobile Equipment Identity (IMEI) and the type of the user terminal.

The embodiment ends in step 320.

In an embodiment, the apparatus may be configured to determine the amount of electromagnetic radiation experienced by the user of the user terminal only when the user terminal is closer than a predetermined distance to the user.

In an embodiment, the above described procedure may be executed continuously. For example, the information on the received and transmitted power may be read at given time intervals. In an embodiment, the interval is 1 to 2 seconds. The call connection status and data transfer status and information from the sensors may as well be monitored continuously or at given time intervals.

The radiation value may be determined continuously or at given time intervals. The determined value may be shown on the display of the apparatus and stored in the memory of the apparatus. In an embodiment, storing frequency is not the same as the determination and display frequency. For example, radiation values may be stored in memory less frequently than determined and shown.

There are various ways for determining and storing radiation related data. In an embodiment, cumulative values may be determined and stored in the memory (and in the network server). In some embodiments, only cumulative values are stored. For example, the apparatus may be configured to determine cumulative radiation values one per each hour, i.e. the radiation experienced by the user during each hour is determined and stored.

In addition, values related to radiation based on received signal powers and transmitted signal powers may be determined stored independently. Furthermore, radiation values related to different external transmitters may be determined and stored independently. Thus, radiation values related to cellular communication and values related to WLAN/WiFi communication may be stored determined and separately.

In an embodiment, radiation values related to voice calls and values related to data transfer may be determined and stored separately. This is based on the call connection and data transfer status information.

The apparatus may be configured to continuously estimate the radiation the user is exposed to. The radiation values vary depending on the usage of the user terminal. The user may be aware of the radiation caused by voice calls as the user terminal is actively used by the user. However, data traffic may be performed by the user terminal independently without user intervention. The terminal may be configured to check email and social media updates continuously or at given time intervals. This usage causes radiation exposure which the user may not be aware of. The cumulative radiation exposure values determined by the apparatus and shown to the user may help the user to use the user terminal safely.

In an embodiment, the above mentioned values are stored in the user terminal memory and transmitted to a network server at given time intervals. For example, the determined information may be sent to the network server once per day.

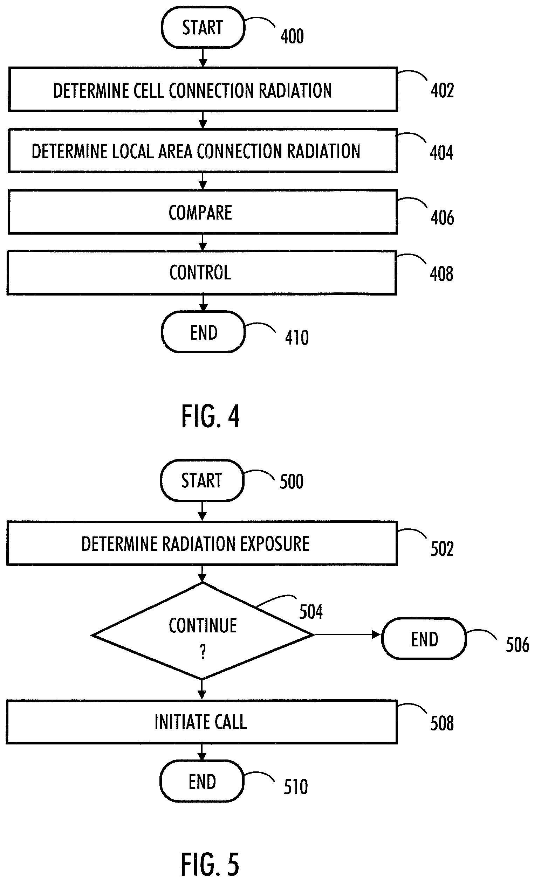

Figure 4 is a flowchart illustrating an example embodiment. The flowchart gives further examples how the apparatus of Figure 2 may perform step 206 of Figure 2. In an embodiment, the apparatus may be the user terminal or a part of a user terminal running suitable software configured to control the execution of following steps. The example starts at step 400.

In step 402, the apparatus is configured to determine the amount of radiation caused by cellular connection the user of the user terminal is exposed to.

In step 404, the apparatus is configured to determine the amount of radiation caused by local area network connection the user of the user terminal is exposed to

In step 406, the apparatus is configured to compare the determined amounts of radiation.

In step 408, the apparatus is configured to control the data transfer capabilities of the user terminal by controlling data transfer to utilise the connection causing smaller amount of radiation.

The embodiment ends in step 410.

Figure 5 is a flowchart illustrating an example embodiment. The flowchart gives an example how the apparatus may control voice call capabilities of a user terminal. In an embodiment, the apparatus may be the user terminal or a part of a user terminal running suitable software configured to control the execution of following steps. The example starts at step 500.

In step 502, the apparatus is configured to determine an estimate for the amount of electromagnetic radiation experienced by the user of the user terminal.

In step 504, the apparatus is configured to determine that the determined amount of radiation is larger than a predetermined radiation value and that the user is about to initiate a voice call at this high radiation situation. The apparatus may be configured to prompt the user to confirm the initiation of a voice call when instantaneous amount of radiation the user of the user terminal is exposed to is larger than a predetermined instantaneous radiation value.

If the user selects not to continue, the process ends in step 506.

If the user selects to continue with the voice call, the call is initiated in step 508.

The embodiment ends in step 510.

In an embodiment, when the user is about to initiate a voice call at a high radiation situation, the apparatus may be configured to alert the user with a message or vibration indicating that making a voice call would lead to a high radiation exposure.

This kind of situation may arise for example when the user is located underground where the radio path to the base station serving the user terminal is obscured by buildings. The user may select to post pone the call until a more suitable location is reached.

In an embodiment, information given by sensors of the user terminal and properties of the user terminal are taken into account when determining the possible radiation exposure. For example, if it is determined that the user terminal is located away from the user, limitations to the voice call and data transfer capabilities of the user terminal are not introduced. For example, it may be determined that the user terminal is on a table with speaker or hands free operation enabled. On the other hand, it may be determined that the user terminal is near the head of the user or in a pocket. In such cases limitations to the voice call and data transfer capabilities of the user terminal may be introduced at a high radiation situation.

Figure 6 illustrates an embodiment. The figure illustrates a simplified example of an apparatus in which embodiments of the invention may be applied. In some embodiments, the apparatus is a user terminal or a part of a user terminal.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 600 configured to control at least part of the operation of the apparatus. The control circuitry 600 is configured to execute one or more applications.

The apparatus may comprise a memory 602 for storing data and/or applications. Furthermore the memory may store software 604 executable by the control circuitry 600. The memory may be integrated in the control circuitry.

The apparatus may comprise a communication interface 606. The communication interface is operationally connected to the control circuitry 600. The communication interface may comprise a transceiver which enables the apparatus to communicate with other apparatuses and be in connection with the internet, for example. The communication interface may comprise several radio units enabling the apparatus to utilise for communication a cellular network such as LTE, LTE-A, UMTS, or a wireless network (WLAN, WiFi, WiMAX).

The software 604 may comprise a computer program comprising program code means adapted to cause the control circuitry 600 of the apparatus to control and communicate with the communication interface 606.

The apparatus may further comprise user interface 610 operationally connected to the control circuitry 600. The interface may comprise a (touch sensitive) display, a keypad, a microphone, and a speaker, for example.

The apparatus may further comprise sensors 612. The sensors may comprise proximity, acceleration, location and temperature sensors, for example. The location sensor also may be realized with a satellite positioning receiver 614 which enables the controller to determine the location of the apparatus.

In an embodiment, the applications may cause the apparatus to receive information on the power level of signals at least one radio transceiver of a user terminal has received from one or more external transmitters; determine information on the power level of the signals transmitted by the at least one radio transceiver of the user terminal; receive information from one or more sensors of the user terminal; determine the amount of electromagnetic radiation the user of the user terminal is exposed to on the basis on the received and determined information and properties of the user terminal; compare the determined amount of radiation to a predetermined radiation value; and control the voice call and data transfer capabilities of the user terminal on the basis of the comparison.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or control circuitries able to perform the above-described steps may be implemented as an electronic digital computer, or a circuitry which may comprise a working memory (RAM), a central processing unit (CPU), and a system clock. The CPU may comprise a set of registers, an arithmetic logic unit, and a controller. The controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst a number of computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

In an embodiment, the apparatus may comprise means for receiving information on the power level of signals at least one radio transceiver of a user terminal has received from one or more external transmitters; means for determining information on the power level of the signals transmitted by the at least one radio transceiver of the user terminal; means for receiving information from one or more sensors of the user terminal; means for determining the amount of electromagnetic radiation the user of the user terminal is exposed to on the basis on the received and determined information and properties of the user terminal; means for comparing the determined amount of radiation to a predetermined radiation value; and means for controlling the voice call and data transfer capabilities of the user terminal on the basis of the comparison.

It will be obvious to a person skilled in the art that, as the technology advances, the inventive concept can be implemented in various ways. The invention and its embodiments are not limited to the examples described above but may vary within the scope of the claims.

## Claims

1. An apparatus, comprising:
at least one processor; and
at least one memory including computer program code,
the at least one memory and the computer program code configured to, with the at least one processor, cause the apparatus at least to:
receive (304) information on a power level of signals at least one radio transceiver of a user terminal has received from one or more external transmitters;
determine (308) information on a power level of signals transmitted by the at least one radio transceiver of the user terminal;
determining (306) information on a call connection and data transfer status of the user terminal;
receive (310) information from one or more sensors of the user terminal; **characterised in that** the at least one memory and the computer program code configured to, with the at least one processor, cause the apparatus further to:
determine the model of the user terminal;
transmit a query to a cloud server regarding the properties of the user terminal, the query comprising the model of the user terminal;
receive from the cloud server information on the SAR value of the model of the user terminal;
determine (312) an amount of electromagnetic radiation the user of the user terminal is exposed to separately for call connections and data transfer traffic on the basis on the received and determined information and properties of the user terminal;
compare (504) the determined amount of radiation to a predetermined radiation value; and
control (206) a voice call and data transfer capabilities of the user terminal on the basis of the comparison.

2. The apparatus of claim 1, the at least one memory and the computer program code configured to, with the at least one processor, cause the apparatus further to:
determine and store cumulative values for the amount of electromagnetic radiation the user of the user terminal is exposed to;
take cumulative values into account in the comparison.

3. The apparatus of any preceding claim, the at least one memory and the computer program code configured to, with the at least one processor, cause the apparatus further to:
determine information on the call connection and data transfer status of the user terminal;
take call connection and data transfer status into account when determining the amount of electromagnetic radiation the user of the user terminal is exposed.

4. The apparatus of any preceding claim, the at least one memory and the computer program code configured to, with the at least one processor, cause the apparatus further to:
control the data transfer capabilities by disabling data transfer when instantaneous amount of radiation the user of the user terminal is exposed to is larger than a predetermined instantaneous radiation value.

5. The apparatus of any preceding claim, the at least one memory and the computer program code configured to, with the at least one processor, cause the apparatus further to:
determine the amount of radiation caused by cellular connection the user of the user terminal is exposed to;
determine the amount of radiation caused by local area network connection the user of the user terminal is exposed to
control the data transfer capabilities by controlling data transfer to utilise the connection causing smaller amount of radiation.

6. The apparatus of any preceding claim, the at least one memory and the computer program code configured to, with the at least one processor, cause the apparatus further to:
control the voice call transfer capabilities by prompting the user to confirm initiation of a voice call when instantaneous amount of radiation the user of the user terminal is exposed to is larger than a predetermined instantaneous radiation value.

7. The apparatus of any preceding claim, the at least one memory and the computer program code configured to, with the at least one processor, cause the apparatus further to:
determine how close the user terminal is to the user on the basis of the information received from one or more sensors of the user terminal;
control the voice call transfer capabilities by disabling the initiation of a voice call when instantaneous amount of radiation the user of the user terminal is exposed to is larger than a predetermined instantaneous radiation value if sensors indicate the user terminal is near the users body.

8. The apparatus of any preceding claim, the at least one memory and the computer program code configured to, with the at least one processor, cause the apparatus further to:
control the data transfer capabilities by allowing data transfer only periodically.

9. A computer program product embodied on a distribution medium readable by a computer and comprising program instructions which, when loaded into an apparatus, execute the steps:
receiving (304) information on a power level of signals at least one radio transceiver of a user terminal has received from one or more external transmitters;
determining (308) information on a power level of signals transmitted by the at least one radio transceiver of the user terminal;
determining (306) information on a call connection and data transfer status of the user terminal;
receiving (310) information from one or more sensors of the user terminal; **characterised by**
determining the model of the user terminal;
transmitting a query to a cloud server regarding the properties of the user terminal, the query comprising the model of the user terminal;
receiving from the cloud server information on the SAR value of the model of the user terminal;
determining (312) an amount of electromagnetic radiation the user of the user terminal is exposed to separately for call connections and data transfer traffic on the basis on the received and determined information and properties of the user terminal;
comparing (504) the determined amount of radiation to a predetermined radiation value; and
control (206) a voice call and data transfer capabilities of the user terminal on the basis of the comparison.

## Patentansprüche

1. Vorrichtung, die umfasst:
wenigstens einen Prozessor; und
wenigstens einen Speicher, der Computerprogramm-Code enthält,
wobei der wenigstens eine Speicher und der Computerprogramm-Code so eingerichtet sind, dass die Vorrichtung mit dem wenigstens einen Prozessor veranlasst wird, die folgenden Schritte durchzuführen:
Empfangen (304) von Informationen über einen Leistungspegel von Signalen, die wenigstens ein Funk-Sendeempfänger eines Endgerätes von einer oder mehreren externen Sendeeinrichtung/en empfangen hat;
Bestimmen (308) von Informationen über einen Leistungspegel von mit dem wenigstens einen Funk-Sendeempfänger des Endgerätes gesendeten Signalen;
Bestimmen (306) von Informationen über einen Sprachverbindungs- und Datenübertragungs-Status des Endgerätes;
Empfangen (310) von Informationen von einem oder mehreren Sensor/en des Endgerätes;
**dadurch gekennzeichnet, dass**
der wenigstens eine Speicher und der Computerprogramm-Code so eingerichtet sind, dass mit dem wenigstens einen Prozessor die Vorrichtung veranlasst wird, die folgenden weiteren Schritte durchzuführen:
Bestimmen des Modells des Endgerätes;
Senden einer Abfrage zu einem Cloud-Server
bezüglich der Eigenschaften des Endgerätes, wobei die Abfrage das Modell des Endgerätes umfasst;
Empfangen von Informationen über den SAR-Wert des Modells des Endgerätes von dem Cloud-Server;
Bestimmen (312) eines Maßes elektromagnetischer Strahlung, dem der Benutzer des Endgerätes separat für Sprachverbindungen und Datenübertragungs-Verkehr ausgesetzt ist, auf Basis der empfangenen und bestimmten Informationen sowie von Eigenschaften des Endgerätes;
Vergleichen (504) des bestimmten Maßes an Strahlung mit einem vorgegebenen Strahlungswert; sowie
Steuern (206) von Sprachverbindungs- und Datenübertragungs-Kapazitäten des Endgerätes auf Basis des Vergleichs.

2. Vorrichtung nach Anspruch 1, wobei der wenigstens eine Speicher und der Computerprogramm-Code so eingerichtet sind, dass die Vorrichtung mit dem wenigstens einen Prozessor veranlasst wird, die folgenden weiteren Schritte durchzuführen:
Bestimmen und Speichern kumulativer Werte für das Maß an elektromagnetischer Strahlung, dem der Benutzer des Endgerätes ausgesetzt ist;
Berücksichtigen kumulativer Werte bei dem Vergleich.

3. Vorrichtung nach einem der vorangehenden Ansprüche, wobei der wenigstens eine Speicher und der Computerprogramm-Code so eingerichtet sind, dass mit dem wenigstens einen Prozessor die Vorrichtung veranlasst wird, die folgenden weiteren Schritte durchzuführen:
Bestimmen von Informationen über den Sprachverbindungs- und Datenübertragungs-Status des Endgerätes;
Berücksichtigen des Sprachverbindungs- und Datenübertragungs-Status beim Bestimmen des Maßes elektromagnetischer Strahlung, dem der Benutzer des Endgerätes ausgesetzt ist.

4. Vorrichtung nach einem der vorangehenden Ansprüche, wobei der wenigstens eine Speicher und der Computerprogramm-Code so eingerichtet sind, dass mit dem wenigstens einen Prozessor die Vorrichtung veranlasst wird, des Weiteren durchzuführen:
Steuern der Datenübertragungs-Kapazitäten durch Deaktivieren von Datenübertragung, wenn das aktuelle Maß an Strahlung, dem der Benutzer des Endgerätes ausgesetzt ist, größer ist als ein vorgegebener aktueller Strahlungswert.

5. Vorrichtung nach einem der vorangehenden Ansprüche, wobei der wenigstens eine Speicher und der Computerprogramm-Code so eingerichtet sind, dass mit dem wenigstens einen Prozessor die Vorrichtung veranlasst wird, die folgenden weiteren Schritte durchzuführen:
Bestimmen des durch zellulare Verbindung verursachten Maßes an Strahlung, dem der Benutzer des Endgerätes ausgesetzt ist;
Bestimmen des durch lokale Netzwerk-Verbindung verursachten Maßes an Strahlung, dem der Benutzer des Endgerätes ausgesetzt ist
Steuern der Datenübertragungs-Kapazitäten, indem Datenübertragung so gesteuert wird, dass die Verbindung genutzt wird, die das geringere Maß an Strahlung verursacht.

6. Vorrichtung nach einem der vorangehenden Ansprüche, wobei der wenigstens eine Speicher und der Computerprogramm-Code so eingerichtet sind, dass mit dem wenigstens einen Prozessor die Vorrichtung veranlasst wird, die folgenden weiteren Schritte durchzuführen:
Steuern der Sprachverbindungs-Kapazitäten, indem der Benutzer aufgefordert wird, Herstellung einer Sprachverbindung zu bestätigen, wenn das aktuelle Maß an Strahlung, dem der Benutzer des Endgerätes ausgesetzt ist, größer ist als ein vorgegebener aktueller Strahlungswert.

7. Vorrichtung nach einem der vorangehenden Ansprüche, wobei der wenigstens eine Speicher und der Computerprogramm-Code so eingerichtet sind, dass mit dem wenigstens einen Prozessor die Vorrichtung veranlasst wird, die folgenden weiteren Schritte durchzuführen:
Bestimmen, wie nahe das Endgerät dem Benutzer ist, auf Basis der von einem oder mehreren Sensor/en des Endgerätes empfangenen Informationen;
Steuern der Sprachverbindungs-Kapazitäten durch Deaktivieren der Herstellung einer Sprachverbindung, wenn das aktuelle Maß an Strahlung, dem der Benutzer des Endgerätes ausgesetzt ist, größer ist als ein vorgegebener aktueller Strahlungswert, wenn Sensoren anzeigen, dass sich das Endgerät in der Nähe des Körpers des Benutzers befindet.

8. Vorrichtung nach einem der vorangehenden Ansprüche, wobei der wenigstens eine Speicher und der Computerprogramm-Code so eingerichtet sind, dass mit dem wenigstens einen Prozessor die Vorrichtung veranlasst wird, des Weiteren durchzuführen:
Steuern der Datenübertragungs-Kapazitäten, indem Datenübertragung nur periodisch zugelassen wird.

9. Computerprogramm-Erzeugnis, das auf einem Verteilungs-Medium ausgeführt ist, das von einem Computer gelesen werden kann und Programm-Befehle umfasst, auf die hin beim Laden in eine Vorrichtung die folgenden Schritte ausgeführt werden:
Empfangen (304) von Informationen über einen Leistungspegel von Signalen, die wenigstens einen Funk-Sendeempfänger eines Endgerätes von einer oder mehreren externen Sendeeinrichtung/en empfangen hat;
Bestimmen (308) von Informationen über einen Leistungspegel von mit dem wenigstens einen Funk-Sendeempfänger des Endgerätes gesendeten Signalen;
Bestimmen (306) von Informationen über einen Anruf- und Datenübertragungs-Status des Endgerätes;
Empfangen (310) von Informationen von einem oder mehreren Sensor/en des Endgerätes;
**gekennzeichnet durch**
Bestimmen des Modells des Endgerätes;
Senden einer Abfrage zu einem Cloud-Server
bezüglich der Eigenschaften des Endgerätes, wobei die Abfrage das Modell des Endgerätes umfasst;
Empfangen von Informationen über den SAR-Wert des Modells des Endgerätes von dem Cloud-Server;
Bestimmen (312) eines Maßes elektromagnetischer Strahlung, dem der Benutzer des Endgerätes separat für Sprachverbindungen und Datenübertragungs-Verkehr ausgesetzt ist, auf Basis der empfangenen und bestimmten Informationen sowie von Eigenschaften des Endgerätes;
Vergleichen (504) des bestimmten Maßes an Strahlung mit einem vorgegebenen Strahlungswert; sowie
Steuern (206) von Sprachverbindungs- und Datenübertragungs-Kapazitäten des Endgerätes auf Basis des Vergleichs.

## Revendications

1. Appareil comprenant :
au moins un processeur ; et
au moins une mémoire comprenant un code de programme informatique,
la au moins une mémoire et le code de programme informatique étant configurés pour,
avec le au moins un processeur, amener l'appareil au moins à :
recevoir (304) des informations sur un niveau de puissance de signaux qu'au moins un émetteur-récepteur radio d'un terminal utilisateur a reçu depuis un ou plusieurs émetteurs externes ;
déterminer (308) des informations sur un niveau de puissance de signaux transmis par le au moins un émetteur-récepteur radio du terminal utilisateur ;
déterminer (306) des informations sur un état de connexion d'appel et de transfert de données du terminal utilisateur ;
recevoir (310) des informations d'un ou plusieurs capteurs du terminal utilisateur ; **caractérisé en ce que** la au moins une mémoire et le code de programme informatique sont configurés pour, avec le au moins un processeur, amener l'appareil à en outre :
déterminer le model du terminal utilisateur ;
transmettre une interrogation à un serveur cloud concernant les propriétés du terminal utilisateur, l'interrogation comprenant le model du terminal utilisateur ;
recevoir du serveur cloud des informations sur la valeur SAR du model du terminal utilisateur ;
déterminer (312) une quantité de rayonnement électromagnétique à laquelle l'utilisateur du terminal utilisateur est séparément exposé pour des connexions d'appel et un trafic de transfert de données sur la base des informations et propriétés reçues et déterminées du terminal d'utilisateur ;
comparer (504) la quantité de rayonnement déterminée à une valeur de rayonnement prédéterminée ; et
commander (206) des capacités d'appel vocal et de transfert de données du terminal utilisateur sur la base de la comparaison.

2. Appareil selon la revendication 1, la au moins une mémoire et le code de programme informatique étant configurés pour, avec le au moins un processeur, amener l'appareil à en outre :
déterminer et stocker des valeurs cumulées concernant la quantité de rayonnement électromagnétique à laquelle l'utilisateur du terminal utilisateur est exposé ;
prendre en compte les valeurs cumulées lors de la comparaison.

3. Appareil selon l'une quelconque des revendications précédentes, la au moins une mémoire et le code de programme informatique étant configurés pour, avec le au moins un processeur, amener l'appareil à en outre :
déterminer des informations sur l'état de connexion d'appel et de transfert de données du terminal utilisateur ;
prendre en compte l'état de connexion d'appel et de transfert de données lorsqu'il est déterminé la quantité de rayonnement électromagnétique à laquelle l'utilisateur du terminal utilisateur est exposé.

4. Appareil selon l'une quelconque des revendications précédentes, la au moins une mémoire et le code de programme informatique étant configurés pour, avec le au moins un processeur, amener l'appareil à en outre :
commander les capacités de transfert de données en désactivant un transfert de données lorsqu'une quantité de rayonnement instantanée à laquelle l'utilisateur du terminal utilisateur est exposé est supérieure à une valeur de rayonnement instantanée prédéterminée.

5. Appareil selon l'une quelconque des revendications précédentes, la au moins une mémoire et le code de programme informatique étant configurés pour, avec le au moins un processeur, amener l'appareil à en outre :
déterminer la quantité de rayonnement provoquée par une connexion cellulaire à laquelle l'utilisateur du terminal utilisateur est exposé ;
déterminer la quantité de rayonnement provoquée par une connexion à un réseau local à laquelle l'utilisateur du terminal utilisateur est exposé
commander les capacités de transfert de données en commandant un transfert de données qui utilise la connexion entraînant une plus petite quantité de rayonnement.

6. Appareil selon l'une quelconque des revendications précédentes, la au moins une mémoire et le code de programme informatique étant configurés pour, avec le au moins un processeur, amener l'appareil à en outre :
commander les capacités de transfert d'appel vocal en demandant à l'utilisateur de confirmer l'initiation d'un appel vocal lorsqu'une quantité de rayonnement instantanée à laquelle l'utilisateur du terminal utilisateur est exposé est supérieure à une valeur de rayonnement instantanée prédéterminée.

7. Appareil selon l'une quelconque des revendications précédentes, la au moins une mémoire et le code de programme informatique étant configurés pour, avec le au moins un processeur, amener l'appareil à en outre :
déterminer à quel point le terminal utilisateur est proche de l'utilisateur sur la base des informations reçues d'un ou de plusieurs capteurs du terminal utilisateur ;
commander les capacités de transfert d'appel vocal en désactivant l'initiation d'un appel vocal lorsqu'une quantité de rayonnement instantanée à laquelle l'utilisateur du terminal utilisateur est exposé est supérieure à une valeur de rayonnement instantanée prédéterminée si des capteurs indiquent que le terminal utilisateur est proche du corps de l'utilisateur.

8. Appareil selon l'une quelconque des revendications précédentes, la au moins une mémoire et le code de programme informatique étant configurés pour, avec le au moins un processeur, amener l'appareil à en outre :
commander les capacités de transfert de données en permettant un transfert de données seulement périodiquement.

9. Produit de programme informatique incorporé sur un support de distribution lisible par un ordinateur et comprenant des instructions de programme qui, lorsqu'elles sont chargées dans un appareil, exécutent les étapes consistant à :
recevoir (304) des informations sur un niveau de puissance de signaux qu'au moins un émetteur-récepteur radio d'un terminal utilisateur a reçu depuis un ou plusieurs émetteurs externes ;
déterminer (308) des informations sur un niveau de puissance de signaux transmis par le au moins un émetteur-récepteur radio du terminal utilisateur ;
déterminer (306) des informations sur un état de connexion d'appel et de transfert de données du terminal utilisateur ;
recevoir (310) des informations d'un ou plusieurs capteurs du terminal utilisateur ; **caractérisé par** les étapes consistant à
déterminer le model du terminal utilisateur ;
transmettre une interrogation à un serveur cloud concernant les propriétés du terminal utilisateur, l'interrogation comprenant le model du terminal utilisateur ;
recevoir du serveur cloud des informations sur la valeur SAR du model du terminal utilisateur ;
déterminer (312) une quantité de rayonnement électromagnétique à laquelle l'utilisateur du terminal utilisateur est séparément exposé pour des connexions d'appel et un trafic de transfert de données sur la base des informations et propriétés reçues et déterminées du terminal utilisateur ;
comparer (504) la quantité de rayonnement déterminée à une valeur de rayonnement prédéterminée ; et
commander (206) des capacités d'appel vocal et de transfert de données du terminal utilisateur sur la base de la comparaison.
